# EUROPÄISCHE PATENTSCHRIFT

(11) **EP 0 593 597 B1**
(45) Veröffentlichungstag und Bekanntmachung des Hinweises auf die Patenterteilung: **02.10.1996**
(21) Anmeldenummer: 92914730.4
(22) Anmeldetag: 07.07.1992
(51) Int. Cl.: H02K 41/02, H01F 7/06

(54) **LINEARBESCHLEUNIGER**
LINEAR ACCELERATOR
ACCELERATEUR LINEAIRE

(30) Priorität: 08.07.1991 DE 4122601
(43) Veröffentlichungstag der Anmeldung: 27.04.1994
(73) Patentinhaber: MAGNET-MOTOR GESELLSCHAFT FÜR MAGNETMOTORISCHE TECHNIK MBH, D-82319 Starnberg (DE)
(72) Erfinder: HEIDELBERG, Götz, D-8136 Starnberg (DE); EHRHART, Peter, D-8000 München 70 (DE); REINER, Gerhard, D-8121 Pähl (DE); GRÜNDL, Andreas, D-8000 München 70 (DE)
(74) Vertreter: Klunker . Schmitt-Nilson . Hirsch
(86) Internationale Anmeldenummer: EP9201530
(87) Internationale Veröffentlichungsnummer: WO9301645

(56) Entgegenhaltungen:
- EP-A- 0 040 509
- DE-A- 1 955 829
- DE-A- 2 811 445
- FR-A- 493 418
- FR-A- 505 696
- FR-A- 2 339 200
- FR-E- 22 448
- IBM TECHNICAL DISCLOSURE BULLETIN Bd. 22, Nr. 11, April 1980, New Yrok US, Seiten 4972-4973; A. BOGH : 'MOVING COIL ACTUATOR WITH INTEGRAL ENERGY STORAGE PARTICULARLY FOR LINE/MATRIX PRINTERS'

## Beschreibung

Die Erfindung betrifft einen Linearbeschleuniger, mit mindestens einem Längs-Statorabschnitt, der eine lineare Bewegungsbahn definiert, und der mehrere Statorspulen aufweist, und mit einem entlang der Bewegungsbahn beschleunigbaren Läufer mit mehreren Läuferleitern, wobei die Statorleiter ebenso wie die Läuferleiter in einer zur Bewegungsbahn senkrechten Ebene bezüglich einer zur Bewegungsbahn parallelen Achse rotationssymmetrisch angeordnet sind.

Solche Vorrichtungen sind im allgemeinen als Linearantriebe ausgebildet. Bekannt ist die Ausbildung mit einem Längsstator, der in mehrere, jeweils mit einer getrennten Stromversorgung ausgestatttete Statorabschnitte unterteilt ist, über denen ein auf der Unterseite mit Läuferspulen ausgestatteter Läufer in Form eines Wagens, Schlittens oder dergleichen verfahrbar ist. Derartige Vorrichtungen dienen zum Bewegen und Positionieren von Maschinenteilen, zum Transportieren von Gütern und dergleichen.

Ein Linearbeschleuniger der genannten Art ist in der FR-E-22448 gezeigt, ferner in FR-A-493418, DE-A-28 11 445, FR-A-505696 und DE-A-195 58 29. In der FR-E-22448 (Fig. 1) ist zur Verstärkung des Magnetfelds vorgeschlagen, daß der Stator mehrere parallele, axial orientierte Leiter aufweist. Die im Stand der Technik verwendeten Statoranordnungen führen zur Ausbildung von einzelnen, in Ringform nebeneinander angeordneten, etwa V-förmigen magnetischen Kreisen.

Mit der vorliegenden Erfindung soll ein Linearbeschleuniger geschaffen werden, bei dem es weniger auf das Verfahren des Läufers über große Strecken und das exakte Positionieren des Läufers an einer bestimmten Stelle des LängsStatorabschnitts geht, als vielmehr darum, dem Läufer auf einer relativ kurzen Strecke eine sehr starke Beschleunigung zu verleihen, wobei der Läufer eine gewisse Masse aufweist. Neben der im Zuge der Beschleunigung ohnehin erforderlichen beschränkten Lagebeziehung zwischen Stator und Läufer kommt es wesentlich auf die hohe Beschleunigung des Läufers an, damit die Läufermasse z.B. als Ramme oder dergleichen verwendet werden kann, also z.B. dort einsetzbar ist, wo bislang Dampframmen und ähnliches eingesetzt worden sind. Auch andere Anwendungsgebiete für den Linearbeschleuniger sind möglich.

Die bisherigen Ausführungsformen Von Linearantrieben eignen sich als reine Beschleuniger nicht, da in aller Regel die magnetischen Felder nur auf einer Seite des Stators bzw. des Läufers erzeugt werden, mit der Folge, daß die magnetischen Felder bezogen auf die Läufermasse nur in unzureichendem Maße vorhanden sind und darüberhinaus auch die Führungselemente zum Führen des Läufers entlang dem Statorabschnitt sich für starke Beschleunigungen nicht eignen.

Demgegenüber schafft die Erfindung einen Linearbeschleuniger der eingangs genannten Art, bei dem die als Statorspule ausgebildeten Statorleiter in der Weise ausgerichtet sind, daß ein rotationsymmetrisch die Achse umschließendes magnetisches Feld entsteht, und daß entlang der Bewegungsbahn mehrere jeweils mit einer separaten Stromversorgung versehene Statorabschnitte angeordnet sind.

Die gesamte Anordnung aus Statorabschnitt und Läufer ist rotationssymmetrisch aufgebaut. Der Begriff Statorabschnitt bedeutet hier einen mit einer eigenen Stromversorgung versehenen Statorabschnitt. Demgemäß können entlang der Bewegungsbahn mehrere jeweils mit einer separaten Stromversorgung versehene Statorabschnitte angeordnet sein, um die einzelnen Statorabschnitte abhängig von der Lage des Läufers und der dort vorhandenen Beschleunigung optimal zu regeln.

Durch die rotationssymmetrische Anordnung von Statorabschnitt und Läufer wird erreicht, daß eine sehr starke Wechselwirkung zwischen Stator und Läufer stattfindet. Diese Wechselwirkung kann über den gesamten Umfang des Läufers erfolgen, insbesondere dadurch, daß die Statorspulen derart ausgerichtet sind, daß ein die Achse rotationssymmetrisch umschließendes magnetisches Feld entsteht.

Man kann z.B. vier Statorspulen symmetrisch um die Achse anordnen, und in den Zwischenräumen zwischen den vier Statorspulen befinden sich dann Läuferspulen, die von dem durch die Statorspulen erzeugten Magnetfeld durchflossen werden.

Im Gegensatz zu bekannten Linearantrieben ist bei dem erfindungsgemäßen Linearbeschleuniger der Läufer von einem Magnetfeld umgeben, welches in der Ebene senkrecht zu der Achse einem geschlossenen Kreis entspricht. Damit lassen sich auf den Läufer erhebliche Kräfte übertragen, so daß der Läufer auf sehr kurzer Strecke eine sehr hohe Beschleunigung erfährt. Mit dem beschleunigten Läufer muß eine Kommutierung einhergehen, wobei die Kommutierung an die Beschleunigung des Läufers angepaßt ist.

Hierzu sieht die Erfindung vor, daß pro Statorabschnitt eine Kommutierungseinrichtung oder - alternativ - mehrere parallel arbeitende Kommutierungseinrichtungen vorgesehen sind. Damit erfolgt die elektronische Kommutierung abschnittsweise oder - noch besser - stückweise innerhalb eines Statorabschnitts. Damit läßt sich eine optimale Anpassung der Xommutierung an die jeweilige Beschleunigung des Läufers an verschiedenen Stellen des Statorabschnitts oder der Statorabschnitte erreichen. Um die richtige und optimale Kommutierung zu erreichen, stellen die elektronischen Kommutierungsneinrichtungen die Ströme in den Stator- und Läuferspulen längs der Bewegungsbahn entsprechend der Läuferstellung ein, die durch Stellungssensoren detektiert wird. Während der Läufer in dem Statorabschnitt oder den Statorabschnitten beschleunigt wird, wird die jeweilige Stellung des Läufers von den Sensoren erfaßt. Die Sensoren liefern Stellungssignale an die Kommutiereinrichtung, die daraufhin eine raschere Kommutierung einstellt.

Wenn bestimmte Parameter vorgegeben sind, so z.B. die Bemessungen des Stators und des Läufers sowie die maximale elektrische Leistung, sowie weitere Parameter, so läßt sich der Läufer nur bis zu einem Maximalwert beschleunigen. Bis zu diesem Maximalwert sind aber Änderungen der Beschleunigung möglich. Dementsprechend erfolgt die Leistungsauslegung der elektronischen Kommutierungseinrichtung entsprechend der durch die gewünschte Beschleunigung und die aktuelle Geschwindigkeit des Läufers gebildete Leistungsaufnahme.

Um die Lage des Läufers während der Beschleunigung im Inneren des Statorabschnitts zu stabilisieren, insbesondere zu zentrieren, werden erfindungsgemäß die Statorspulen und die Läuferspulen derart ausgebildet, daß der Läufer beim Stromfluß durch die Spulen zur Achse hin zentriert wird.

In einer speziellen Ausgestaltung der Erfindung ist vorgesehen, daß der Läufer aus einem zentralen Läufermittelkörper und daran lösbar festgelegten Läuferspulenkörpern besteht, wobei letztere den Läufermittelkörper, d.h. die eigentliche Läufermasse, durch magnetische Kräfte festhalten.

Man kann die Statorspulen und Läuferspulen aus bewickelten Eisenblechpaketen herstellen, bevorzugt hingegen wird die Ausbildung der Statorspulen und der Läuferspulen als Luftspulen, d.h. als eisenlose Spulen.

In einer speziellen Ausführungsform sind diese Luftspulen mäanderförmig parallel zur Bewegungsrichtung ausgebildet, wobei sie auf einem elektrisch nicht leitenden Träger aufgebracht sind.

Man könnte nun daran denken, in dem Läufer Permanentmagnete anzuordnen, diese sind jedoch zur Erzielung einer hohen Beschleunigung ungeeignet, da sie einerseits eine relativ große Masse aufweisen und andererseits ein relativ schwaches Feld erzeugen. Deshalb sieht die Erfindung Läuferspulen vor. Um in die Läuferspulen Strom einzuspeisen, kann man entlang dem Statorabschnitt eine oder mehrere Stromschienen anordnen, um über die Stromschienen Strom in die Läuferspulen einzuspeisen. Eine derartige Konstruktion ist im Rahmen der Erfindung möglich, eine spezielle Ausgestaltung sieht jedoch vor, daß die Läuferspulen vor und bis zu dem Beginn der Beschleunigung mit Strom geladen, d.h. erregt werden, um danach im synchronen Betrieb beschleunigt zu werden. Nach dem Beginn der Beschleunigung erfolgt also keine Aufladung der Spulen mehr bei relativ geringen Läufermassen kann die in den Läuferspulen gespeicherte elektrische Energie ausreichen, um den Spulen eine erhebliche Beschleunigung zu vermitteln. Alternativ kann man vorsehen, daß den Läuferspulen - wie oben erwähnt - über Stromschienen elektrische Energie zugeführt wird, und zwar entweder über den gesamten Beschleunigungsvorgang hinweg, oder nur zu Beginn des Beschleunigungsvorgangs. Hierzu sieht die Erfindung vor, daß der Läufer eine Hohlachse aufweist, in der eine Stromschiene aufgenommen ist, von der während der Beschleunigung des Läuferteils der Erregungsstrom auf die Läuferspulen übertragen wird, wobei der Läufer synchron beschleunigt wird. Alternativ könnte man auch die Stromschienen außerhalb des Läufers anordnen.

Eine noch weitere Ausgestaltung der Erfindung sieht bezüglich der Stromversorgung der Läuferspulen vor, ein bewegtes Versorgungskabel für die Läuferspulen vorzusehen, das aus einer feststehenden Stromquelle gespeist wird. Der Erregerstrom - für die Läuferspulen - wird während der Beschleunigung abhängig von einem bestimmten Beschleunigungsverlauf bezüglich der Weglänge und/oder der Zeit geregelt.

Die oben angegebenen Möglichkeiten zur Einspeisung des Stroms in die Läuferspulen umfassen also das "Aufladen" der Spulen vor dem Beginn des Beschleunigungsvorgangs und/oder das Einspeisen des Stroms über Stromschienen oder ein mitgeführtes Versorgungskabel. Die Erfindung sieht als Ausgestaltung hierzu, aber auch als selbständige Möglichkeit, die asynchrone Erregung der Läuferspulen während des Beschleunigungsvorgangs vor. Während die eigentliche Beschleunigung dadurch erfolgt, daß die erregten Läuferspulen von den Statorspulen synchron beschleunigt werden, bedeutet eine asynchrone Erregung eine Gleichstrom- oder impulsförmige Erregung, derzufolge aus dem Stator induktiv Energie in die Läuferspulen gepumpt wird. Diese in die Läuferspulen gepumpte Energie steht zur Bildung eines Magnetfelds zur Verfügung. Man kann durch den asynchronen Anteil während der Beschleunigung den Strom in den Läuferspulen abhängig von dem gewünschten Beschleunigungsverlauf regeln.

Hinsichtlich der mechanischen Ausgestaltung wurden oben bereits einige Vorschläge gemacht. Speziell sieht die Erfindung vor, daß die Statorspulen koaxial innerhalb eines Rohres angeordnet sind. Man kann sich hierzu ein Rohr vorstellen, von dessen Innenwand aus - rotations-symmetrisch - mehrere Radialwände nach innen abstehen, wobei auf den Flächen der Wände die mäanderförmigen Spulenleitungen ausgebildet sind. Die mäanderförmigen Leiter auf den beiden Seiten der Wände sind - ähnlich wie bei den Läuferspulen - derart ausgebildet, daß sich auf der Vorderseite und Rückseite an überlappenden Stellen gleiche Stromrichtungen und folglich gleiche Magnetfeldrichtungen ergeben. Mann kann z.B. auf der einen Seite einer Wand oder eines Trägers einen mäanderförmigen Leiter in Längsrichtung anordnen, der am Ende des Trägers über eine Durchkontaktierung oder über eine Stirnseite des Trägers auf die Rückseite geführt ist, um dort zurückgeführt zu werden, und zwar in teilweiser überlappung mit dem mäanderförmigen Leiter auf der ersten Seite des Trägers.

Damit die Beschleunigung des Läufers nicht verhindert wird, können an den gegenseitigen Berührungsstellen, insbesondere auch an Stromschienen, Gleitmittel zur reibungsarmen Führung des Läufers vorhanden sein.

Im folgenden wird ein Ausführungsbeispiel der Erfindung anhand der Zeichnung näher erläutert. Es zeigen:
- Fig. 1 -: eine perspektivische Ansicht eines quer zur Längsrichtung aufgeschnittenen Längs-Statorabschnitts mit darin befindlichem Läufer,
- Fig. 2 -: eine Querschnittansicht einer speziellen Ausführungsform eines Läufers für einen Linearbeschleuniger,
- Fig. 3 -: eine perspektivische Ansicht einer Läuferspule,
- Fig. 4 -: eine Draufsicht auf eine Statorspule, und
- Fig. 5 -: eine schematische Darstellung eines Linearbeschleunigers mit mehreren hintereinander geschalteten Statorabschnitten.

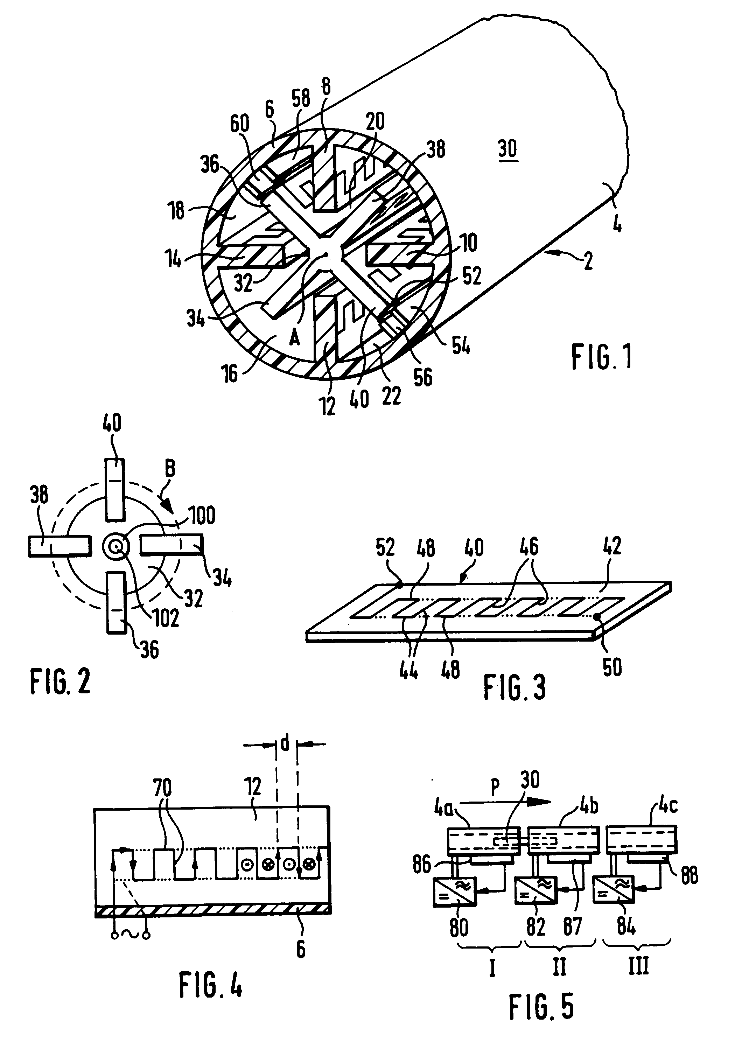

Ein in Fig. 1 perspektivisch dargestellter Linearbeschleuniger 2 enthält einen aus Kunststoff bestehenden Stator 4 in Form eines Rohrkörpers 6, von dessen Innenwand in Abständen von 90° vier Radialträger 8, 10, 12 und 14 zur Mitte hin abstehen. Jeder der Radialträger 8, 10, 12 und 14 hat eine bestimmte radiale Länge und eine bestimmte Dicke und ist einstückig mit dem Rohrkörper 6 ausgebildet.

Zwischen den Radialträgern 8, 10, 12 und 14 sind Längshohlräume 16, 18, 20 und 22 gebildet.

Die Seelenachse des Rohrkörpers 6 bildet gleichzeitig eine Symmetrieachse A des gesamten Linearbeschleunigers, welche außerdem die Bewegungsrichtung eines Läufers 30 definiert.

Der Läufer 30 kann aus einem einstückigen Kunststoffkörper bestehen, wie in Fig. 1 angedeutet ist. Er besteht jedoch vorzugsweise aus einem aus Kunststoff oder Metall geformten Läufermittelkörper 32 mit über den Umfang gleichmäßig verteilten Längsschlitzen, in denen Radialflügel 34, 36, 38 und 40 aufgenommen sind.

Gemäß Fig. 1 sind die Radialflügel 34, 36, 38 und 40 einstückig mit dem Läufermittelkörper ausgebildet.

Die Radialflügel 34 bis 40 greifen in die Längshohlräume 16 bis 22 des Längs-Stators 4 ein, wie aus Fig. 1 ersichtlich ist.

Fig. 3 zeigt in perspektivischer Ansicht einen Radialflügel 40. Die anderen Radialflügel 34, 36 und 38 sind identisch wie der Radialflügel 40 ausgebildet. Gemäß Fig. 3 ist durch den Radialflügel eine Läuferspule gebildet. Demnach besteht die Läuferspule bzw. der Radialflügel aus einem plattenförmigen Träger 42 aus elektrisch nicht-leitendem Material mit einer Länge von etwa 20 cm. Auf der in Fig. 3 oben dargestellten Fläche ist eine mäanderförmige Leitung 44 ausgebildet, z.B. durch Kaschieren der Oberfläche des Trägers 42 und durch Fortätzen der Umgebungsbereiche der Leitung 44.

Von einem an der Oberkante des Trägers 42 befindlichen Kontaktanschluß 42 geht die mäanderförmige Leitung 44 in Längsrichtung des Trägers 42, also parallel zur Achse A und zur Bewegungsbahn in Form von Längsabschnitten 48 und Querabschnitten 46 bis zu einem Durchkontaktierungsloch 50. Auf der in Fig. 3 verdeckten, unteren Seite des Trägers 42 läuft die mäanderförmige Leitung 44 zurück bis zu einem in Fig. 3 nicht dargestellten Anschluß an der unteren Kante des Trägers 42.

Die in Fig. 3 nicht zu sehende, zurücklaufende mäanderförmige Leitung ist so ausgebildet, daß sich die Querabschnitte 46 überlappen mit den Querabschnitten 46 auf der Oberseite des Trägers, während die Längsabschnitte 48 um die Breite der mäanderförmigen Leitung versetzt sind, wie in Fig. 3 durch Punkte angedeutet ist.

Gemäß Fig. 2 sind vier Läuferspulen des in Fig. 3 dargestellten Typs in Längsnuten des Läufermittelkörpers 32 eingesetzt. Gemäß Fig. 1 sind vier Läuferspulen der in Fig. 3 dargestellten Art einstückig mit einem Läufermittelkörper ausgebildet.

Der in Fig. 3 dargestellte Gleitkontakt 52 an der Kante ist gemäß Fig. 1 auf der Außenseite des Läufers 30 angeordnet, um in Gleitberührung mit einer Stromschiene zu stehen, die von der Innenseite des Rohrkörpers 6 des Stators absteht. Wie in Fig. 1 angedeutet, sind zwei Stromschienen 54 und 56 dem als Läuferspule dienenden Radialflügel 40 zugeordnet, um über den in Fig. 3 gezeigten Gleitkontakt 52 bzw. den in Fig. 3 verdeckten Gleitkontakt auf der Unterseite des Trägers 42 Strom zuzuführen. Weiterhin sind in Fig. 1 zwei Stromschienen 58 und 60 für die Läuferspule angeordnet, die durch den Radialflügel 36 gebildet ist. Auch sind für die Läuferspulen 38 und 34 Stromschienen vorhanden, die in Fig. 1 jedoch nicht dargestellt sind.

Fig. 2 zeigt für die Stromversorgung eine abgewandelte Ausführungsform. Der Läufer nach Fig. 2 besitzt in dem Läufermittelkörper 32 eine Hohlachse 100, in der eine zentrale Stromschiene 42 mit mehreren Leiterbahnen aufgenommen ist. Die Anschlüsse, z.B. der Anschluß 52 in Fig. 3, sind über Durchgangslöcher in dem Läufermittelkörper mit (in der Zeichnung nicht dargestellten) Gleitkontakten verbunden, die mit den Leiterbahnen auf der Stromschiene 102 in Kontakt stehen.

Fig. 4 zeigt die Ausbildung einer Statorspule, hier repräsentiert durch einen Radialträger 12, auf dessen beiden Seiten jeweils eine mäanderförmige elektrische Leitung 70 ausgebildet ist. Die Schrittweite der Mäander-Schleifen beträgt d und entspricht der Schrittweite des mäanderförmigen Leiters bei den Läuferspulen (Fig. 3).

Gemäß Fig. 4 ist von einem externen Anschluß am Rohrkörper 6 die mäanderförmige Leitung parallel zur Bewegungsrichtung (Achse A) über die Längserstreckung einer Seitenfläche des Radialträgers 12 geführt, wobei in Fig. 4 durch die kleinen Pfeile die jeweilige Stromrichtung angedeutet ist. Am rechten Ende des Radialträgers 6 ist die Leitung auf die Rückseite (in Fig. 4 verdeckte Seite) des Radialträgers geführt, wobei die Querabschnitte der mäanderförmigen Leitung sich im Grundriß decken (überlappen) mit den Querabschnitten auf der Vorderseite des Radialträgers, während die Längsabschnitte um die Mäanderbreite versetzt sind, wie es durch punktierte Linien angedeutet ist. Damit fließt der Strom durch die mäanderförmige Leitung auf der Vorderseite abschnittsweise in die gleiche Richtung wie auf der Rückseite des Trägers. Dementsprechend ergeben sich Feldlinien für das Magnetfeld, wie sie in Fig. 4 durch die Flußrichtungssymbole angedeutet sind. Wie bekannt, bedeutet ein Kreuz in einem Kreis eine Flußrichtung vom Betrachter fort, während ein Punkt in einem Kreis eine Flußrichtung auf den Betrachter zu bedeutet.

Aus der obigen Beschreibung der Anordnung der Läuferspulen und der Statorspulen ist klar, daß sich bei der Struktur gemäß Fig. 1 und Fig. 2 insgesamt ein kreisförmiges Magnetfeld B ergibt, das in Fig. 2 durch eine gestrichelte Kreislinie angedeutet ist. Die Richtung der Kraft verläuft in dem Linearbeschleuniger 2 also axial, wobei abhängig von der Stromrichtung die Kraft gemäß Fig. 1 entweder in die Zeichnungsebene hinein oder aus der Zeichnungsebene heraus gerichtet ist und dementsprechend der Läufer beschleunigt wird.

Fig. 5 zeigt einen Linearbeschleuniger, der aus drei hintereinandergeschalteten, miteinander ausgerichteten Längs-Statorabschnitten I, II und III besteht, die jeweils dem in Fig. 1 dargestellten Stator 4 entsprechen, was in Fig. 5 durch die Bezugszeichen 4a, 4b und 4c angedeutet ist.

Außerdem sind in Fig. 5 bei jedem Statorabschnitt 4a, 4b und 4c zugehörige Wechselrichter- und Kommutiereinheiten 80, 82 und 84 dargestellt. Ferner ist jedem Statorabschnitt 4a, 4b und 4c ein Sensorabschnitt 86, 87 bzw. 88 zugeordnet, der mehrere Einzelsensoren aufweisen kann, um die jeweilige Lage des Läufers exakt zu bestimmen. Ein entsprechendes Sensorsignal wird an die zugehörige Wechselrichter- und Kommutiereinheit 80, 82 bzw. 84 gegeben.

Die Kommutierung erfolgt nach Maßgabe des Abstands d (siehe Fig. 4), wobei wegen der zunehmenden Läufergeschwindigkeit die Kommutierung mit einer stetig höheren Frequenz erfolgen muß.

Auch die einzelnen Statorabschnitte I, II und III besitzen jeweils eine separate Stromversorgung, hier jeweils gebildet durch eine Wechselrichter- und Kommutiereinheit. Mit zunehmender Geschwindigkeit muß bei konstanter Beschleunigung eine immer größere Energiemenge aufgebracht werden, da der Betrag der kinetischen Energie mit dem Quadrat der Geschwindigkeit zunimmt. Dementsprechend werden auch die jeweiligen Leistungen in den Statorabschnitten I, II und III ausgelegt. Das heißt: Die elektrische Leistung des Statorabschnitts III ist erheblich höher als diejenige im Statorabschnitt I. Wenn für eine Kraft von 1000 N und einer Geschwindigkeit von 10 m/s eine elektrische Leistung von 10 kW aufzubringen ist, so muß bei gleicher Kraft und doppelter Geschwindigkeit (20 m/s) eine Leistung von 20 kW aufgebracht werden.

Die in Fig. 2 dargestellte Ausgestaltung des Läufers bietet die Möglichkeit, die einzelnen Spulenelemente 34, 36, 38 und 40 magnetisch in dem Läufermittelkörper 42 zu halten. Als Material für die Läuferspulen kommen Cu, Al, Kohlefasern und Polymerleiter, jedoch auch Supraleiter, in Betracht. Das Material für die elektrisch nicht-leitenden Träger (Träger 42 in Fig. 3, Radialträger 12 in Fig. 4) ist vorzugsweise ausgewählt aus faserverstärkten Materialien, Verbundmaterialien und dergleichen.

## Patentansprüche

1. Linearbeschleuniger, mit mindestens einem Längs-Statorabschnitt (4a, 4b, 4c; I, II, III), der eine lineare Bewegungsbahn definiert, und der mehrere Statorleiter (8, 10, 12, 14; 70) aufweist, und mit einem entlang der Bewegungsbahn beschleunigbaren Läufer (30) mit mehreren Läuferleitern (34, 36, 38, 40, 44), wobei die Statorleiter (8-14; 70) ebenso wie die Läuferleiter (34-40, 44) in einer zur Bewegungsbahn senkrechten Ebene bezüglich einer zur Bewegungsbahn parallelen Achse (A) rotationssymmetrisch angeordnet sind, dadurch gekennzeichnet, daß die als Statorspule (8-14, 70) ausgebildeten Statorleiter in der Weise ausgerichtet sind, daß ein rotationssymmetrisch die Achse (A) umschließendes magnetisches Feld (B) entsteht, und daß entlang der Bewegungsbahn mehrere jeweils mit einer separaten Stromversorgung versehene Statorabschnitte (I, II, III) angeordnet sind.

2. Linearbeschleuniger nach Anspruch 1 dadurch gekennzeichnet, daß mindestens vier Statorspulen (8-14, 70) symmetrisch um die Achse (A) angeordnet sind.

3. Linearbeschleuniger nach Anspruch 1 oder 2, dadurch gekennzeichnet, daß sich die Läuferspulen (34-40, 44) kämmend in den von den Statorspulen (8-14, 70) gebildeten Zwischenräumen (16-22) bewegen, und von dem durch die Statorspulen (8-14, 70) erzeugten Magnetfeld (B) durchflossen werden.

4. Linearbeschleuniger nach einem der Ansprüche 1 bis 3, dadurch gekennzeichnet, daß pro Statorabschnitt eine Komnutierungseinrichtung (80-84) oder mehrere parallel arbeitende Kommutierungseinrichtungen vorgesehen sind.

5. Linearbeschleuniger nach Anspruch 4, dadurch gekennzeichnet, daß die elektronischen Kommutierungseinrichtungen (80-84) die Ströme in den Spulen längs der Bewegungsbahn entsprechend der Läuferstellung einstellen, welche zur Stellungssensoren (86-88) detektiert werden.

6. Linearbeschleuniger nach einem der Ansprüche 3 bis 5, dadurch gekennzeichnet, daß die Leistungsauslegung der elektronischen Kommutierungseinrichtung (80-84) entsprechend der durch die gewünschte Beschleunigung und die aktuelle Geschwindigkeit des Läufers (30) gebildete Leistungsaufnahme erfolgt.

7. Linearbeschleuniger nach einem der Ansprüche 1 bis 6, dadurch gekennzeichnet, daß die Stator- und die Läuferspulen (8-14, 70; 34-40, 44) derart ausgebildet sind, daß der Läufer bei Stromfluß zur Achse hin zentriert wird.

8. Linearbeschleuniger nach einem der Ansprüche 1 bis 7, dadurch gekennzeichnet, daß der Läufer aus einem zentralen Läufermittelkörper (32) und daran lösbar festgelegten Läuferspulenkörpern (34-40, 44) besteht, wobei letztere magnetisch an dem Läufermittelkörper fixierbar sind.

9. Linearbeschleuniger nach einem der Ansprüche 1 bis 8, dadurch gekennzeichnet, daß die Stator- und die Läuferspulen aus bewickelten Eisenblechpaketen bestehen.

10. Linearbeschleuniger nach Anspruch 1 bis 8, dadurch gekennzeichnet, daß die Stator- und die Läuferspulen (8-14, 70; 34-40, 44) aus Luftspulen (eisenlosen Spulen) bestehen.

11. Linearbeschleuniger nach Anspruch 10, dadurch gekennzeichnet, daß die Luftspulen mäanderförmig parallel zur Bewegungsrichtung ausgebildet sind.

12. Linearbeschleuniger nach Anspruch 10 und 11, dadurch gekennzeichnet, daß die Luftspulen des Läufers (30) auf einem elektrisch nicht leitenden Träger (42) aufgebracht sind.

13. Linearbeschleuniger nach einem der Ansprüche 1 bis 12, dadurch gekennzeichnet, daß die Läuferspulen (34-40, 44) vor und bis zu der Beschleunigung mit Strom geladen, d.h. erregt werden, und danach im synchronen Betrieb beschleunigt werden.

14. Linearbeschleuniger nach einem der Ansprüche 1 bis 12, dadurch gekennzeichnet, daß der Läufer eine Hohlachse (100) aufweist, in der eine Stromschiene (102) aufgenommen ist, von der während der Beschleunigung des Läuferteils der Erregungsstrom auf die Läuferspulen übertragen wird, wobei der Läufer (30) synchron beschleunigt wird.

15. Linearbeschleuniger nach einem der Ansprüche 1 bis 12, dadurch gekennzeichnet, daß die Läuferspulen mittels eines während der Beschleunigung mit bewegten Versorgungskabels, das aus einer feststehenden Quelle gespeist wird, erregt werden und von den Statorspulen (8-14, 70) synchron beschleunigt werden.

16. Linearbeschleuniger nach Anspruch 14 und 15, dadurch gekennzeichnet, daß der Erregungsstrom während der Beschleunigung abhängig von einem bestimmten Beschleunigungsverlauf bezüglich der Weglänge und/oder der Zeit geregelt wird.

17. Linearbeschleuniger nach einem der Ansprüche 13 bis 16, dadurch gekennzeichnet, daß die Läuferspulen während der Beschleunigung nur oder zusätzlich asynchron erregt werden.

18. Linearbeschleuniger nach Anspruch 17, dadurch gekennzeichnet, daß durch den asynchronen Anteil während der Beschleunigung der Strom innerhalb der Läuferspulen (34-40, 44) derart geregelt wird, daß sich eine dem gewünschten Beschleunigungsverlauf angepaßte Erregung ergibt.

19. Linearbeschleuniger nach einem der Ansprüche 1 bis 18, dadurch gekennzeichnet, daß die Statorspulen koaxial innerhalb eines Rohrs (6) angeordnet sind.

20. Linearbeschleuniger nach einem der Ansprüche 1 bis 19, dadurch gekennzeichnet, daß Läufer- und Statorteile an den gegenseitigen Berührungsstellen mit Gleiteinrichtungen zur reibungsarmen Führung des Läuferteils ausgestattet sind.

## Claims

1. A linear accelerator comprising at least one longitudinal stator portion (4a, 4b, 4c; I, II, III) defining a linear path of movement and having a plurality of stator conductors (8, 10, 12, 14; 70), and a runner (30) accelerable along the path of movement having a plurality of runner conductors (34, 36, 38, 40, 44), the stator conductors (8-14; 70) as well as the runner conductors (34-40, 44) being disposed rotationally symmetrically in a plane perpendicular to the path of movement with respect to an axis (A) parallel to the path of movement, **characterized** in that the stator conductors formed as stator coils (8-14, 70) are aligned so as to give rise to a magnetic field (B) surrounding the axis (A) in rotationally symmetric fashion, and a plurality of stator portions (I, II, III) each provided with a separate power supply are disposed along the path of movement.

2. The linear accelerator of claim 1, **characterized** in that at least four stator coils (8-14, 70) are disposed symmetrically about the axis (A).

3. The linear accelerator of claim 1 or 2, **characterized** in that the runner coils (34-40, 44) move in mesh within the spaces (16-22) formed by the stator coils (8-14, 70), and the magnetic field (B) produced by the stator coils (8-14, 70) flows through them.

4. The linear accelerator of any of claims 1 to 3, **characterized** in that one commutating means (80-84) or a plurality of commutating means working in parallel are provided per stator portion.

5. The linear accelerator of claim 4, **characterized** in that the electronic commutating means (80-84) adjust the currents in the coils along the path of movement in accordance with the runner position which is detected by the position sensors (86-88).

6. The linear accelerator of any of claims 3 to 5, **characterized** in that the power of the electronic commutating means (80-84) is dimensioned in accordance with the power input formed by the desired acceleration and the actual speed of the runner (30).

7. The linear accelerator of any of claims 1 to 6, **characterized** in that the stator coils and runner coils (8-14, 70; 34-40, 44) are formed such that the runner is centered toward the axis during current flow.

8. The linear accelerator of any of claims 1 to 7, **characterized** in that the runner comprises a central runner body (32) and runner coil bodies (34-40 44) fixed detachably thereto, the latter being fixable to the central runner body magnetically.

9. The linear accelerator of any of claims 1 to 8, **characterized** in that the stator coils and runner coils comprise spooled bundles of iron laminations.

10. The linear accelerator of claim 1 to 8, **characterized** in that the stator coils and runner coils (8-14, 70; 34-40, 44) comprise air-core coils.

11. The linear accelerator of claim 10, b in that the air-core coils are formed in a meander shape parallel to the direction of motion.

12. The linear accelerator of claims 10 and 11, **characterized** in that the air-core coils of the runner (30) are applied to an electrically nonconductive carrier (42).

13. The linear accelerator of any of claims 1 to 12, **characterized** in that the runner coils (34-40, 44) are charged with current, i.e. excited, before and until acceleration and thereafter accelerated in synchronous operation.

14. The linear accelerator of any of claims 1 to 12, **characterized** in that the runner has a hollow axle (100) for taking up a conductor rail (102) which transmits the excitation current to the runner coils during acceleration of the runner member, the runner (30) being accelerated synchronously.

15. The linear accelerator of any of claims 1 to 12, **characterized** in that the runner coils are excited by means of a supply cable carried during acceleration and fed from a stationary source, and are accelerated by the stator coils (8-14, 70) synchronously.

16. The linear accelerator of claims 14 and 15, **characterized** in that the excitation current is regulated during acceleration in accordance with a certain acceleration course with respect to length of path and/or time.

17. The linear accelerator of any of claims 13 to 16, **characterized** in that the runner coils are excited only or additionally asynchronously during acceleration.

18. The linear accelerator of claim 17, **characterized** in that the current within the runner coils (34-40, 44) is regulated by the asynchronous proportion during acceleration so as to produce an excitation adapted to the desired acceleration course.

19. The linear accelerator of any of claims 1 to 18, **characterized** in that the stator coils are disposed coaxially within a pipe (6).

20. The linear accelerator of any of claims 1 to 19, **characterized** in that runner and stator members are equipped at the mutual points of contact with sliding means for low-friction guidance of the runner member.

## Revendications

1. Accélérateur linéaire comprenant au moins une partie de stator longitudinale (4a, 4b, 4c; I, II, III) qui définit une voie de déplacement linéaire et qui présente plusieurs conducteurs de stator (8, 10, 12, 14; 70), et comprenant un induit (30) pouvant être accéléré le long de la voie de déplacement pourvu de plusieurs conducteurs d'induit (34, 36, 38, 40, 44), les conducteurs de stator (8-14; 70) comme les conducteurs d'induit (34-40, 44) étant disposés de façon à présenter dans un plan perpendiculaire à la voie de déplacement une symétrie de rotation par rapport à un axe (A) parallèle à la voie de déplacement, caractérisé en ce que les conducteurs de stator formant une bobine de stator (8-14, 70) sont dirigés de façon à engendrer un champ magnétique (B) à symétrie de rotation entourant l'axe (A), et en ce que plusieurs parties de stator (I, II, III) ayant chacune une alimentation électrique séparée sont disposées le long de la voie de déplacement.

2. Accélérateur linéaire selon la revendication 1 caractérisé en ce qu'au moins quatre bobines de stator (8-14, 70) sont disposées symétriquement autour de l'axe (A).

3. Accélérateur linéaire selon la revendication 1 ou 2 caractérisé en ce que les bobines d'induit (34-40, 44) se déplacent en étant engagées à la façon d'un peigne dans les espaces intermédiaires (16-22) formés par les bobines de stator (8-14, 70) et sont traversées par le champ magnétique (B) engendré par les bobines de stator (8-14, 70).

4. Accélérateur linéaire selon l'une quelconque des revendications 1 à 3 caractérisé en ce qu'il comprend un dispositif de commutation (80, 84) ou plusieurs dispositifs de commutation fonctionnant en parallèle par partie de stator.

5. Accélérateur linéaire selon la revendication 4 caractérisé en ce que les dispositifs de commutation électroniques (80-84) règlent les courants dans les bobines le long de la voie de déplacement en fonction de la position de l'induit qui est détectée par des capteurs de position (86-88).

6. Accélérateur linéaire selon l'une quelconque des revendications 3 à 5 caractérisé en ce que la puissance délivrée par le dispositif de commutation électronique (80-84) correspond à la puissance absorbée correspondant à l'accélération souhaitée et à la vitesse actuelle de l'induit (30).

7. Accélérateur linéaire selon l'une quelconque des revendications 1 à 6 caractérisé en ce que les bobines de stator et d'induit (8-14, 70; 34-40, 44) sont configurées de façon que l'induit soit centré vers l'axe lors du passage du courant.

8. Accélérateur linéaire selon l'une quelconque des revendications 1 à 7 caractérisé en ce que l'induit est composé d'un corps médian d'induit central (32) et de corps de bobines d'induit (34-40, 44) fixés de façon amovible à celui-ci, ces derniers pouvant être fixés magnétiquement au corps médian d'induit.

9. Accélérateur linéaire selon l'une quelconque des revendications 1 à 8 caractérisé en ce que les bobines de stator et d'induit sont composées d'empilages de tôles de fer enroulées.

10. Accélérateur linéaire selon l'une quelconque des revendications 1 à 8 caractérisé en ce que le bobines de stator et d'induit (8-14, 70; 34-40, 44) sont composées de bobines d'air (bobines sans fer).

11. Accélérateur linéaire selon la revendication 10 caractérisé en ce que les bobines sans fer ont une configuration ondulée parallèlement à la direction de déplacement.

12. Accélérateur linéaire selon les revendications 10 et 11 caractérisé en ce que les bobines sans fer de l'induit (30) sont disposées sur un support (42) non conducteur électrique.

13. Accélérateur linéaire selon l'une quelconque des revendications 1 à 12 caractérisé en ce que les bobines d'induit (34-40, 44) sont chargées, c'est-à-dire excitées, avec du courant avant et jusqu'à l'accélération et sont ensuite accélérées en fonctionnement synchrone.

14. Accélérateur linéaire selon l'une quelconque des revendications 1 à 12 caractérisé en ce que l'induit présente un axe creux (100) dans lequel est reçu une barre conductrice (102) d'où le courant d'excitation est transmis aux bobines d'induit pendant l'accélération de la partie d'induit, l'induit (30) étant accéléré de façon synchrone.

15. Accélérateur linéaire selon l'une quelconque des revendications 1 à 12 caractérisé en ce que les bobines d'induit sont excitées au moyen d'un câble d'alimentation accompagnant le déplacement pendant l'accélération alimenté à partir d'une source fixe et sont accélérées de façon synchrone par les bobines de stator (8-14, 70).

16. Accélérateur linéaire selon les revendications 14 et 15 caractérisé en ce que le courant d'excitation est régulé pendant l'accélération en fonction d'un déroulement de l'accélération déterminé par rapport à la longueur du trajet et/ou la durée.

17. Accélérateur linéaire selon l'une quelconque des revendications 13 à 16 caractérisé en ce que pendant l'accélération les bobines d'induit sont excitées seulement ou en plus de façon asynchrone.

18. Accélérateur linéaire selon la revendication 17 caractérisé en ce que le courant à l'intérieur des bobines d'induit (34-40, 44) est régulé pendant l'accélération à l'aide de la composante asynchrone de façon à engendrer une excitation adaptée au déroulement de l'accélération souhaité.

19. Accélérateur linéaire selon l'une quelconque des revendications 1 à 18 caractérisé en ce que les bobines de stator sont disposées coaxialement à l'intérieur d'un tube (6).

20. Accélérateur linéaire selon l'une quelconque des revendications 1 à 19 caractérisé en ce que les parties d'induit et de stator sont pourvues de moyens de glissement en des endroits de contact situés vis-à-vis pour le guidage à frottement réduit de la partie d'induit.
